# EUROPÄISCHE PATENTSCHRIFT

(11) **EP 3 013 716 B1**
(45) Veröffentlichungstag und Bekanntmachung des Hinweises auf die Patenterteilung: **16.08.2017**
(21) Anmeldenummer: 14731294.6
(22) Anmeldetag: 20.06.2014
(51) Int. Cl.: B65G 21/20

(54) **ABDICHTEINRICHTUNG FÜR EINE BANDÜBERGABE**
SEALING DEVICE FOR A CONVEYOR TRANSFER
DISPOSITIF D'ÉTANCHÉITÉ POUR UN TRANSFERT D'UNE BANDE CONVOYEUSE

(30) Priorität: 24.06.2013 EP 13173404
(43) Veröffentlichungstag der Anmeldung: 04.05.2016
(73) Patentinhaber: Scrapetec GmbH, 47475 Kamp-Lintfort (DE)
(72) Erfinder: Dünnwald, Wilfried, 47475 Kamp-Lintfort (DE)
(74) Vertreter: Cohausz & Florack
(86) Internationale Anmeldenummer: PCT/EP2014/063014
(87) Internationale Veröffentlichungsnummer: WO 2014/206878

(56) Entgegenhaltungen:
- DE-A1- 2 416 963
- DE-C1- 3 728 624
- JP-A- 10 152 214
- US-A- 2 883 035
- US-A- 6 155 407

## Beschreibung

Die Erfindung betrifft eine Abdichteinrichtung zur Abdichtung der Seitenbereiche eines Förderbandes, wobei beidseitig der Längsachse des Förderbandes jeweils im Randbereich des Förderbandes eine Abfolge von mit Abstand zueinander angeordneten und nachgiebig auf der Oberfläche des Förderbandes aufliegenden Dichtelementen angeordnet ist, wobei die einzelnen Dichtelemente im Winkel zur Längsachse des Förderbandes angeordnet sind und mit ihrem inneren Ende in Laufrichtung des Förderbandes weisen.

Eine Abdichteinrichtung mit den vorgenannten Merkmalen ist in der Anwendung einer zur Abdichtung einer Übergabeschurre gegen ein darunter verlaufendes Förderband aus der JP 10152214 A bekannt. Soweit die unteren Kanten von Übergabeschurren für Förderbänder gegenüber den darunter liegenden Förderbändern abgedichtet werden müssen, um den Austritt von Fördergut und/oder von Staubfahnen zu vermeiden, ist in der vorgenannten JP 10152214 A ein Dichtungssystem vorgeschlagen, welches aus an einer Seitenwange der Übergabeschurre federnd und schwenkbar aufgehängten Dichtelementen besteht. Die plattenartig ausgebildeten Dichtelemente liegen flächig auf der Oberfläche des gemuldeten Förderbandes auf, wobei in der Oberfläche der Dichtelemente nutartige Vertiefungen zum Anschluss von Verbindungsstangen ausgebildet sind. Damit soll erreicht werden, dass das auf dem Förderband liegende Material beim Transport nicht zur Seite hin von dem Förderband fallen kann.

Mit der bekannten Abdichteinrichtung ist der Nachteil verbunden, dass sich aufgrund der federnden Auflage der Dichtelemente auf der Oberfläche des Förderbandes Material unter die Auflagerfläche der Dichtelemente schieben kann, welches dann aufgrund der Relativbewegung des Förderbandes zu den Dichtelementen unter den flächig aufliegenden Dichtelementen hindurch gerollt wird. Damit wird nicht nur aufgrund der auftretenden Reibung die Oberfläche des Förderbandes und auch der Dichtelemente beansprucht, vielmehr kann es je nach der Ausbildung des zu fördernden Materials auch zu Anbackungen und Verklebungen und auch zu einem Abheben der Dichtelemente von dem Förderband kommen, wodurch die Funktion der Dichtelemente beeinträchtigt oder aufgehoben sein kann.

Eine andere Ausbildung einer Abdichteinrichtung ist in der WO 91/09798 A beschrieben, welche aus einer an der Außenseite der Seitenwange einer Übergabeschurre angebrachten Halteplatte und einem daran linear in Richtung auf das unter der Übergabeschurre laufende Förderband federnd beweglichen Dichtungselement besteht. Das aus einem flexiblen Material, insbesondere einem elastomeren Kunststoff bestehende, dichtlippenartig ausgebildete Dichtungselement liegt mit seiner vorderen Stirnkante auf der Oberfläche des gemuldeten Förderbandes auf. Mit dieser Abdichteinrichtung ist der Nachteil verbunden, dass sich aufgrund der stirnseitigen Anlage des Dichtlippenelements an dem Förderband ein linienförmiger Kontakt zwischen dem Gurt des Förderbandes und dem Dichtungselement ergibt. Dieser linienförmige Kontakt führt häufig zu einer Riefenbildung in dem umlaufenden Förderband, weil sich schon bei einer beginnenden Riefenbildung Fördergut in den Riefen ablagert, welches im weiteren Betrieb zu einer Vertiefung der Riefen und gleichzeitig zu einem erhöhten Verschleiß des mit der so gebildeten Riefe zusammenwirkenden Dichtungselementes führt. Dies hat zur Folge, dass bei bereits ausgebildeten Riefen und zunehmendem Verschleiß des linienförmig anliegenden Dichtungselements eine ordnungsgemäße Abdichtung der Übergabe nicht mehr gewährleistet ist. Es kommt hinzu, dass derartige linienförmig arbeitende Dichtungssysteme aus Verschleißgründen häufiger nachgestellt werden müssen und insoweit nicht wartungsfrei sind.

Der Erfindung liegt die Aufgabe zugrunde, eine Abdichtung der eingangs genannten Art bereit zu stellen, die einen geringen Verschleiß des Förderbandes und gleichzeitig gute Dichteigenschaften gewährleistet.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Dichtelemente aus streifenartig ausgebildeten Leitleisten bestehen, deren auf dem Förderband aufliegende Auflagerfläche mit einem Verhältnis ihrer Breite zum Abstand der Leitleisten zueinander von grösser 1:3 im Vergleich zu dem Abstand der Leitleisten schmal ausgelegt ist und dass eine sich längs der äußeren Seitenränder des Förderbandes erstreckende, die äußeren Enden der Leitleisten verbindende Abschlussleiste angeordnet ist.

Anders ausgedrückt sieht die Erfindung vor, dass beidseitig der Längsachse des Förderbandes, jeweils im Randbereich des Förderbandes, eine Abfolge von mit Abstand zueinander angeordneten und nachgiebig auf der Oberfläche des Förderbandes aufliegenden Dichtelementen angeordnet ist, wobei die einzelnen Dichtelemente aus streifenartig ausgebildeten Leitleisten bestehen, die im schrägen Winkel zur Längsachse des Förderbandes angeordnet sind und mit ihrem inneren Ende in Laufrichtung des Förderbandes weisen, wobei die Leitleisten schmal ausgelegt sind, indem das Verhältnis der Breite der jeweiligen Leitleiste zu dem Abstand von zwei der Leitleisten, zwischen denen ein Zwischenraum besteht, größer als 1:3 ausgelegt ist, und dass eine sich längs der äußeren Seitenränder des Förderbandes erstreckende, die äußeren Enden der Leitleisten verbindende Abschlussleiste angeordnet ist, so dass der Zwischenraum zwischen den Leitleisten nach außen zum Randbereich des Förderbandes hin abgeschlossen ist.

Mit der Erfindung ist der Vorteil verbunden, dass aufgrund der einzelnen, mit Abstand zueinander angeordneten streifenartigen Leitleisten und dem Verhältnis von deren Breite zu deren gegenseitigem Abstand sich jeweils nur eine geringe Flächenpressung mit dem Vorteil einer entsprechenden Schonung der Gurtoberfläche des Förderbandes ergibt. Soweit aufgrund der schon im Stand der Technik bekannten Schrägstellung der Leitleisten in die Förderrichtung des Förderbandes das auf dem Förderband liegende Material jeweils zur Mitte des Förderbandes hin geführt ist, verhindern die zwischen den im Verhältnis zu deren Abstand schmal ausgeführten Leitleisten bestehenden Zwischenräume, dass gegebenenfalls unter eine Leitleiste gelangtes Material über die Erstreckung der Abdichteinrichtung mitgeschleppt wird. Vielmehr gelangt derartig unter eine Leitleiste geschobenes Material in den zur darauf folgenden Leitleiste bestehenden Zwischenraum und wird hier durch die Schrägstellung der nachfolgenden Leitleiste wieder zur Bandmitte hin geleitet. Daher sind die Zwischenräume zwischen den Leitleisten im Verhältnis zu deren Auflagerbreite auch so groß bemessen, dass eine derartige Materialableitung unproblematisch erfolgt und es in den Zwischenräumen nicht zu Materialansammlungen und gegebenenfalls -anbackungen kommt. Zusätzlich sind die Zwischenräume durch die an den äußeren Enden der Leitleisten verlaufende Abschlussleiste geschlossen, sodass hier kein Material nach außen austreten kann. Sollte aufgrund eines eintretenden Verschleißes der Abschlussleiste eine Luftströmung zwischen der Abschlussleiste und dem Förderband möglich sein, so würde dadurch im Förderbetrieb eine zwischen den Leitleisten hindurch zur Mitte des Förderbandes gerichtete Luftströmung erzwungen, sodass auch eine diesbezügliche Luftbewegung die Rückführung von Fördergut und Staub auf das Förderband unterstützt und insoweit die Abdichtung des Übergabebereichs verbessert. Gegebenenfalls kann dieser Effekt auch in einem gewünschten Umfang dadurch herbeigeführt werden, dass die Abschlussleiste mit einem geringen Abstand zu der Oberfläche des Förderbandes angebracht wird. Schließlich ergibt sich eine verbesserte Wartungsfreiheit der Abdichteinrichtung daraus, dass im Falle eines auftretenden Verschleißes der Leitleisten eine selbsttätige Nachführung der Abdichtung vorrangig über die Gewichtskraft der auf dem Förderband aufliegenden Leitleisten erfolgt.

Die erfindungsgemäße Abdichteinrichtung lässt sich sowohl zur fortlaufenden seitlichen Abdichtung eines Förderbandes einsetzen als auch zur Abdichtung des Übergabebereichs von einer an ein Fördermittel angeschlossenen Übergabeschurre auf ein darunter verlaufendes Förderband. Dabei ist die Abdichteinrichtung entweder an der Seitenstruktur eines das Förderband tragenden Förderergerüsts oder an der Seitenwange einer Übergabeschurre gehaltert.

Das Verschleißrisiko der Abdichteinrichtung wird vermindert, wenn gemäß einem Ausführungsbeispiel die eine Rechteckform mit der sich in Laufrichtung des Förderbandes erstreckende Längsachse aufweisenden Leitleisten flächig auf der Oberfläche des Förderbandes aufliegen.

Nach einem Ausführungsbeispiel der Erfindung kann vorgesehen sein, dass die einzelnen Leitleisten mit dem äußeren Rand des Förderbandes einen Winkel zwischen 15° und 45° einschließen, wobei in einer zweckmäßigen Ausführungsform vorgesehen ist, dass die einzelnen Leitleisten mit dem äußeren Rand des Förderbandes einen Winkel von 30° einschließen.

Gemäß einem Ausführungsbeispiel der Erfindung ist vorgesehen, dass die zur Mitte des Förderbandes weisenden inneren Enden der Leitleisten mit einer ausgehend von deren unteren Auflagerfläche auf dem Förderband nach oben vorspringenden Rundung oder Abschrägung ausgebildet sind.

Zur Halterung der Leitleisten in dem Übergabebereich ist vorgesehen, dass jeweils eine Mehrzahl von Leitleisten an einem an der Übergabeschurre gehalterten und sich über einen Abschnitt des Förderbandes erstreckenden Träger befestigt sind. Zweckmäßig bestehen die Leitleisten aus Hartmetall oder einem sonstigen verschleißfesten Material.

Soweit nach einem Ausführungsbeispiel der Erfindung vorgesehen ist, dass der streifenartig ausgebildete Träger aus einem flexiblem Material besteht, kann der Träger als ein dünner Gummi- oder Kunststoffgurt ausgebildet sein oder aus einem anderen geeigneten Gewebe bestehen. Soweit die vorzugsweise aus Hartmetall bzw. einem verschleißfesten Material bestehenden Leitleisten an einem derartigen Träger zu befestigen sind, kann vorgesehen sein, dass die Leitleisten an den flexiblen Träger geklebt, geschraubt oder vulkanisiert oder sonstwie in geeigneter Weise befestigt sind.

Nach einem Ausführungsbeispiel der Erfindung ist vorgesehen, dass der Träger mit den an ihm angebrachten Leitleisten mittels einer eine freie Beweglichkeit ermöglichenden Verbindung an einem das Förderband tragenden Förderergerüst gehaltert ist, wobei im Einzelnen vorgesehen sein kann, dass der Träger von einem mit einer Seitenstruktur des Förderergerüsts verbundenen Halter getragen und beweglich an dem Halter gehaltert ist.

Je nach Lage der Seitenstruktur des Förderergerüsts oder der Seitenwange einer Übergabeschurre in Bezug auf das darunter verlaufende Förderband kann nach einem Ausführungsbeispiel der Erfindung vorgesehen sein, dass der Halter an der oberhalb des gemuldeten Förderbandes mit Abstand zur Oberfläche des Förderbandes endenden Seitenstruktur bzw. Seitenwange befestigt ist und der Träger in einer in Richtung des äußeren Randes des Förderbandes zum Halter abgewinkelten Stellung auf dem Randbereich des Förderbandes aufliegt.

Hierbei kann zum Schutz der Verbindung zwischen der Seitenstruktur und dem Halter vorgesehen sein, dass die Seitenstruktur in Richtung des Förderbandes die Verbindung überragt und die Leitleisten in ihrer Längserstreckung bis an die Verbindung oder darüber hinaus bemessen sind.

Alternativ kann vorgesehen sein, dass der Halter an der oberhalb des gemuldeten Förderbandes endenden Seitenstruktur bzw. Seitenwange der Übergabeschurre befestigt ist und der Träger in einer in Richtung auf die Mitte des Förderbandes zum Halter abgewinkelten Stellung auf dem Seitenbereich des Förderbandes aufliegt.

Ebenso zum Schutz der Verbindung zwischen Halter und Träger kann bei dieser Ausführungsform vorgesehen sein, dass an der Seitenstruktur innenseitig ein von der Seitenstruktur in Richtung auf den Träger gerichtetes Abdeckblech angebracht ist.

In der Zeichnung sind Ausführungsbeispiele der Erfindung wiedergegeben, welche nachstehend beschrieben sind. Es zeigen:
- Fig. 1: ein Förderband in einer Vorderansicht mit an dessen Längsseiten unterschiedlich angeordneten Abdichteinrichtungen;
- Fig. 1a: eine andere Ausführungsform einer Abdichteinrichtung für ein Förderband entsprechend Figur 1 in einer Teildarstellung; und
- Fig. 2: den Gegenstand der Figur 1 einer Draufsicht.

Ein gemuldetes Förderband 12 ist in einer nicht weiter dargestellten Weise von der Seitenstruktur 11 eines Förderergerüsts 10 getragen. Alternativ kann es sich bei der Seitenstruktur 11 auch um die Seitenwange einer Übergabeschurre handeln, unter der das Förderband 12 mit Abstand verläuft. Das gemuldete Förderband 12 weist einen Mittenbereich 13 und nach beiden Seiten schräg ansteigende Seitenbereiche 14 auf. Zur Abdichtung des jeweils zwischen dem Ende jeder Seitenwange 11 und der Oberfläche des zugeordneten Seitenbereichs 14 des Förderbandes 12 ist jeweils eine Abdichteinrichtung 15 vorgesehen, wobei die beiden Abdichteinrichtungen 15 jeweils zwar einen identischen technischen Aufbau aufweisen, jedoch in jeweils einer unterschiedlichen Zuordnung zu den Seitenbereichen 14 des Förderbandes 12 angeordnet sind.

Jede Abdichteinrichtung 15 besteht aus einem sich in Längsrichtung des Förderbandes über eine vorgegebene Längserstreckung erstreckenden streifenförmigen Träger 17, der mittels einer Verbindung 19 an dem unteren Ende eines auf der Außenseite jeder Seitenstruktur 11 angebrachten Halters 16 derart gehaltert ist, dass der streifenförmige Träger 17 zur Ausrichtung des Halters 16 bzw. der Seitenstruktur 11 des Förderergerüsts 10 frei beweglich ist. Soweit der Halter 16 und/oder der Träger 17 aus einem flexiblen bzw. dünnwandigen Material, beispielsweise aus Gummi oder einem geeigneten Kunststoff, bestehen kann, kann die Verbindung durch eine Umbiegung des entsprechend ausgewählten Materials von Träger 17 und/oder Halter 16 oder alternativ auch durch eine sogenannte Hakennaht zwischen den beiden vorgenannten Teilen gebildet sein. Bei einer starreren Ausbildung von Träger 17 bzw. Halter 16 kann auch die Anordnung eines Scharniers als Verbindung zwischen Halter 16 und Träger 17 vorgesehen sein.

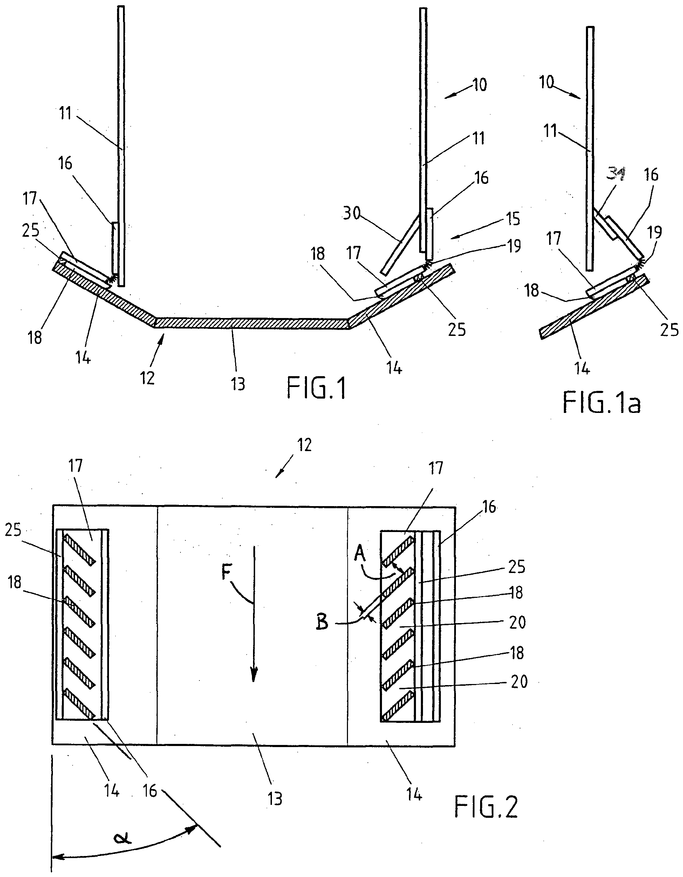

An der dem Förderband 12 zugewandten Unterseite des streifenförmigen Trägers 17 sind Leitleisten 18 angebracht, deren Anordnung im Einzelnen aus Figur 2 ersichtlich ist. Die eine Rechteckform aufweisenden Leitleisten 18 sind jeweils in einem Zwischenräume 20 zwischen sich ausbildenden Abstand zueinander angeordnet. Soweit erfindungsgemäß das Verhältnis der Breite der Leitleisten zu deren Abstand grösser 1:3 ausgelegt sein soll, beträgt der Abstand der Leitleisten 18 ein Mehrfaches der Breite der Leitleisten 18. Beträgt beispielsweise die Breite zweier der auf dem Förderband 12 aufliegenden Leitleisten 18 10 mm (d.h. die jeweilige Leitleiste 18 hat in diesem Beispiel eine Breite von 5 mm), so soll deren Abstand mindestens 15 mm betragen; zweckmäßig ist aber ein größerer Abstand, beispielsweise in der Größenordnung von 150 mm bzw. ein Abstand der Leitleisten 18, der größer als das 10 fache der jeweiligen Leitleistenbreite ist. In Fig. 2 ist die Breite der jeweiligen Leitleiste 18 mit B bezeichnet, während mit A der Abstand zweier Leitleisten 18, zwischen denen ein Zwischenraum 20 besteht, bezeichnet ist.

Aufgrund ihrer besonderen Anordnung liegen die Leitleisten 18 mit einer vergleichsweise großen Auflagerfläche auf dem Förderband 12 auf, so dass sich aufgrund der dadurch bedingten geringen Flächenpressung gurtschonende Eigenschaften der Abdichteinrichtung 15 ergeben. Aus Verschleißgründen bestehen die Leitleisten 18 vorzugsweise aus Hartmetall, wobei diese Hartmetalle auf den als dünnen Gummi- oder Kunststoffgurt ausgebildeten oder aus sonst einem geeigneten Gewebe bestehenden Träger 17 durch Kleben, Schrauben, Vulkanisieren, etc. befestigt sind. Soweit bei längerem Betrieb der Abdichteinrichtung ein Verschleiß eintritt, erfolgt aufgrund der beweglichen Anbindung des Trägers 17 an dem Halter 16 eine selbsttätige und damit wartungsfreie Nachstellung der Auflage der Leitleisten auf dem Gurtband aufgrund der einwirkenden Gewichtskraft oder auch der von der Umbiegung des Materials ausgehenden Umbiegekraft.

In Fig. 2 gibt der Pfeil F die Laufrichtung bzw. Förderrichtung des Förderbandes 12 an. Insbesondere ist in Fig. 2 zu erkennen, dass die einzelnen Leitleisten 18 mit dem äußeren Rand des Förderbandes 12 einen Winkel α einschließen. In dem in Fig. 2 dargestellten Ausführungsbeispiel beträgt der Winkel α etwa 45°. Der Winkel α kann allerdings auch kleiner gewählt werden; vorzugsweise liegt er zwischen 15° und 45°.

Mit dieser sowohl schräg zur Längsachse des Förderbandes 12 als auch in Richtung der Förderrichtung des Förderbandes 12 ausgerichteten Stellung wird erreicht, dass einerseits von dem Förderband 12 bis in die Zwischenräume 20 zwischen die Leitleisten 18 gelangendes Fördergut bzw. dorthin gelangender Staub in Richtung auf das Förderband 12 wieder zurückgeführt wird. Entsprechendes gilt auch für Fördergut, welches bei bestimmten Betriebsbedingungen unter eine Leitleiste 18 bzw. eine an einem Träger 17 befestigte Gruppe von Leitleisten 18 gelangt ist. Dieses Material wird nicht über die Länge der gesamten Abdichteinrichtung unter den Leitleisten 18 hindurchgerollt, sondern nach Eintreten in einen zwischen zwei Leitleisten 18 bestehenden Zwischenraum 20 von der in Förderrichtung nachfolgende Leitleiste 18 wieder in Richtung auf die Mitte des Förderbandes 12 zurückgeführt. Um einen Austritt von in die Zwischenräume 20 gelangtem Fördergut über die Seitenränder des Förderbandes 12 zu verhindern, sind die äußeren Enden der Leitleisten 18 mittels einer sich parallel zu dem äußeren Rand des Förderbandes 12 erstreckenden Abschlussleiste 25 miteinander verbunden, so dass insoweit die Zwischenräume 20 nach außen abgeschlossen sind. Hierbei können die Abschlussleisten 25 ebenso wie die Leitleisten 18 auf der Oberfläche des Förderbandes 12 aufliegen. Wie nicht weiter dargestellt, kann aber auch vorgesehen sein, dass die Abschlussleisten 25 mit einem geringen Abstand zur Oberfläche des Förderbandes 12 angeordnet sind, sodass eine Luftströmung in die Zwischenräume 20 zwischen den Leitleisten 18 möglich ist. Durch die Bewegung des beladenen Förderbandes 12 entsteht ein Sog, und damit wird zwischen den Leitleisten 18 eine Luftströmung in Richtung auf das Förderband 12 zu bewirkt, die einerseits eine natürliche Sperre für das Austreten von Fördergut und/oder Staub aus dem Übergabebereich darstellt und andererseits die Rückführung von Fördergut und/oder Staub auf das Förderband 12 unterstützt.

In der Zeichnung sind bezüglich der linken Seite des Förderergerüsts 10 mit Förderband 12 und dessen rechter Seite unterschiedliche Anordnungen des streifenförmigen Trägers 17 mit Leitleisten 18 dargestellt. Soweit die streifenförmigen Träger 17 an den Enden der Halter 16 jeweils mittels einer eine freie Beweglichkeit ermöglichenden Verbindung 19 gehalten sind, ist auf der linken Seite der Darstellung der Träger 17 mit einer in Richtung zum äußeren Rand des Förderbandes 12 bezüglich des Halters 16 abgewinkelten Stellung angeordnet und liegt auf dem Randbereich des Förderbandes 12 auf, während auf der gegenüberliegenden rechten Seite von Förderergerüst 10 und Förderband 12 eine umgekehrte Anordnung des streifenförmigen Trägers dargestellt ist, im Rahmen derer der Träger 17 in einer in Richtung auf die Mitte des Förderbandes 12 zum Halter 16 abgewinkelten Stellung auf dem Seitenbereich 14 des Förderbandes 12 aufliegt.

Soweit ein Schutz der Verbindung 19 zwischen dem Halter 16 und dem Träger 17 zweckmäßig ist, ist auf der rechten Seite der Darstellung von Figur 1 an der Innenseite der Seitenstruktur 11 ein zusätzliches Abdeckblech 30 angebracht, welches von der Seitenstruktur 11 in Richtung des Trägers 17 verläuft und dabei die Verbindung 19 gegen das auf dem Förderband 12 liegende Material abdeckt. Dem gleichen Zweck dient die auf der linken Seite des Förderbandes 12 erkennbare Verlängerung der Seitenstruktur 11 in Richtung des Förderbandes 12 bis in Höhe der Verbindung 19 bzw. darüber hinaus sowie die Bemessung der Längserstreckung der Leitleisten 18 bis an die Verbindung 19 heran bzw. darüber hinaus. Auch dadurch ist ein wirksamer Schutz der Verbindung 19 realisiert.

Bei dem in Figur 1a dargestellten Ausführungsbeispiel ist eine gleiche Anordnung von Träger 17 und Leitleisten 18 realisiert wie auf der rechten Seite der Darstellung in Figur 1. Soweit bei der in Figur 1 dargestellten Ausführungsform die Leitleisten näher in Richtung der Förderbandmitte aufliegen und dadurch ein Teil des Förderbandquerschnittes verloren geht, zeigt Figur 1a eine Lösung, bei der der Halter 16 mittels eines entsprechenden Tragblechs 31 schräg bzw. im Winkel außen an der Seitenstruktur 11 angebracht ist, so dass hierdurch die Leitleisten 18 bis an den äußeren Rand des Förderbandes 12 rutschen. Gleichzeitig liegt damit die Verbindung 19 außerhalb des auch durch die Seitenstruktur 11 begrenzten Beladungsquerschnittes des Förderbandes 12 und ist damit geschützt.

## Patentansprüche

1. Abdichteinrichtung (15) zur Abdichtung der Seitenbereiche eines Förderbandes (12), wobei beidseitig der Längsachse des Förderbandes (12) jeweils im Randbereich des Förderbandes (12) ein sich in Längsrichtung des Förderbandes (12) erstreckender streifenförmiger Träger (17) mit einer Abfolge von mit einem einen Zwischenraum (20) ausbildenden Abstand zueinander angeordneten und nachgiebig mit einer Auflagerfläche auf der Oberfläche des Förderbandes (12) aufliegenden Dichtelementen angeordnet ist, wobei die einzelnen Dichtelemente in Schrägstellung im Winkel zur Längsachse des Förderbandes (12) angeordnet sind und mit ihrem inneren Ende in Laufrichtung des Förderbandes (12) weisen, **dadurch gekennzeichnet, dass** die Dichtelemente aus streifenartig ausgebildeten Leitleisten (18) bestehen, wobei die Leitleisten (18) mit einem Verhältnis der Breite der Leitleisten (18) zum gegenseitigen Abstand der Leitleisten (18) zueinander von grösser 1:3 im Vergleich zu dem gegenseitigem Abstand der Leitleisten (18) schmal ausgelegt sind und dass eine sich längs der äußeren Seitenränder des Förderbandes (12) erstreckende, die äußeren Enden der Leitleisten (18) verbindende, den Zwischenraum (20) zwischen Leitleisten (18) nach außen abschließende Abschlussleiste (25) angeordnet ist.

2. Abdichteinrichtung nach Anspruch 1, **dadurch gekennzeichnet, dass** die einzelnen Leitleisten (18) mit dem äußeren Rand des Förderbandes (12) einen Winkel zwischen 15° und 45° einschließen.

3. Abdichteichrichtung nach Anspruch 2, **dadurch gekennzeichnet, dass** die einzelnen Leitleisten (18) mit dem äußeren Rand des Förderbandes (12) einen Winkel von 30° einschließen.

4. Abdichteinrichtung nach einem der Ansprüche 1 bis 3, **dadurch gekennzeichnet, dass** die zur Mitte des Förderbandes (12) weisenden inneren Enden der Leitleisten (18) mit einer ausgehend von deren unteren Auflagerfläche auf dem Förderband (12) nach oben vorspringenden Rundung oder Abschrägung ausgebildet sind.

5. Abdichteinrichtung nach einem der Ansprüche 1 bis 4, **dadurch gekennzeichnet, dass** der Träger (17) sich über einen Abschnitt des Förderbandes (12) erstreckt und an einer Übergabeschurre (10) gehaltert ist, wobei jeweils eine Mehrzahl von Leitleisten (18) an dem Träger (17) befestigt sind.

6. Abdichteinrichtung nach einem der Ansprüche 1 bis 5, **dadurch gekennzeichnet, dass** die an dem Träger (17) angebrachten Leitleisten (18) aus einem verschleißfesten Material bestehen.

7. Abdichteinrichtung nach einem der Ansprüche 1 bis 6, **dadurch gekennzeichnet, dass** der streifenförmige Träger (17) aus einem flexiblen Material besteht.

8. Abdichteinrichtung nach einem der Ansprüche 1 bis 7, **dadurch gekennzeichnet, dass** der Träger (17) mit den an ihm angebrachten Leitleisten (18) mittels einer eine freie Beweglichkeit ermöglichenden Verbindung (19) an einem das Förderband (12) tragenden Förderergerüst (10) gehaltert ist.

9. Abdichteinrichtung nach Anspruch 8, **dadurch gekennzeichnet, dass** der Träger (17) von einem mit einer Seitenstruktur (11) des Förderergerüsts (10) verbundenen Halter (16) getragen und beweglich an dem Halter (16) gehaltert ist.

10. Abdichteinrichtung nach Anspruch 9, **dadurch gekennzeichnet, dass** die Seitenstruktur (11) des Förderergerüsts (10) oberhalb des gemuldeten Förderbandes (12) mit Abstand zur Oberfläche des Förderbandes (12) endet, wobei der Halter (16) an der Seitenstruktur (11) des Förderergerüsts (10) befestigt ist und der Träger (17) in einer in Richtung des äußeren Randes des Förderbandes (12) zum Halter (16) abgewinkelten Stellung auf dem Randbereich des Förderbandes (12) aufliegt.

11. Abdichteinrichtung nach Anspruch 10, **dadurch gekennzeichnet, dass** zum Schutz der Verbindung (19) zwischen Träger (17) und Halter (16) die Seitenstruktur (11) in Richtung des Förderbandes (12) die Verbindung (19) überragt und die Leitleisten (18) in ihrer Längserstreckung bis an die Verbindung (19) oder darüber hinaus bemessen sind.

12. Abdichteinrichtung nach Anspruch 9, **dadurch gekennzeichnet, dass** die Seitenstruktur (11) des Förderergerüsts (10) oberhalb des gemuldeten Förderbandes (12) endet, wobei der Halter (16) an der Seitenstruktur (11) des Förderergerüsts (10) befestigt ist und der Träger (17) in einer in Richtung auf die Mitte des Förderbandes (12) zum Halter (16) abgewinkelten Stellung auf dem Seitenbereich des Förderbandes (12) aufliegt.

13. Abdichteinrichtung nach Anspruch 12, **dadurch gekennzeichnet, dass** zum Schutz der Verbindung (19) zwischen Halter (16) und Träger (17) an der Seitenstruktur (11) innenseitig ein von der Seitenstruktur (11) in Richtung auf den Träger (17) gerichtetes Abdeckblech (30) angebracht ist.

## Claims

1. Sealing device (15) for sealing the side regions of a conveyor belt (12), a strip-like support (17) which extends in the longitudinal axis of the conveyor belt (12) and comprises a sequence of sealing elements being arranged on either side of the longitudinal axis of the conveyor belt (12) in the edge region of the conveyor belt (12) in each case, which sealing elements are spaced apart from another with a distance forming a gap (20) and rest with a contact surface on the surface of the conveyor belt (12) in a resilient manner, the individual sealing elements being arranged in an oblique position at an angle to the longitudinal axis of the conveyor belt (12) and pointing in the direction of movement of the conveyor belt (12) by their inner end, **characterised in that** the sealing elements consist of strip-like guide ledges (18), wherein the guide ledges (18) are designed to be narrow, compared to the mutual spacing between the guide ledges (18), in a ratio of the width of said ledges to the mutual spacing between the guide ledges (18) of greater than 1:3, and **in that** an end ledge (25) is arranged, which extends along the outer side edges of the conveyor belt (12) and connects the outers ends of the guide ledges (18) and closes the gap (20) between the guide ledges (18) on the outside.

2. Sealing device according to claim 1, **characterised in that** the individual guide ledges (18) form an angle of between 15° and 45° with the outer edge of the conveyor belt (12).

3. Sealing device according to claim 2, **characterised in that** the individual guide ledges (18) form an angle of 30° with the outer edge of the conveyor belt (12).

4. Sealing device according to any of claims 1 to 3, **characterised in that** the inner ends of the guide ledges (18), which ends point towards the centre of the conveyor belt (12), are formed having a curvature or chamfer which projects upwards on the conveyor belt (12) from the lower contact surface of said ledges.

5. Sealing device according to any of claims 1 to 4, **characterised in that** the support (17) extends over a portion of the conveyor belt (12) and is retained on a transfer chute (10), wherein in each case a plurality of guide ledges (18) are fastened to the support (17).

6. Sealing device according to any of claims 1 to 5, **characterised in that** the guide ledges (18) attached to the support (17) are made of a wear-resistant material.

7. Sealing device according to any of claims 1 to 6, **characterised in that** the strip-like support (17) is made of a flexible material.

8. Sealing device according to any of claims 1 to 7, **characterised in that** the support (17), together with the guide ledges (18) attached thereto, is retained on a conveyor frame (10), which supports the conveyor belt (12), by means of a connection (19) which allows for free mobility.

9. Sealing device according to claim 8, **characterised in that** the support (17) is supported by a retainer (16) connected to a side structure (11) of the conveyor frame (10) and is movably retained on the retainer (16).

10. Sealing device according to claim 9, **characterised in that** the side structure (11) of the conveyor frame (10) ends above the troughed conveyor belt (12) at a spacing from the surface of the conveyor belt (12), wherein the retainer (16) is fastened to the side structure (11) of the conveyor frame (10), and the support (17) rests on the edge region of the conveyor belt (12) in a position which is angled relative to the retainer (16) towards the outer edge of the conveyor belt (12).

11. Sealing device according to claim 10, **characterised in that**, in order to protect the connection (19) between the support (17) and the retainer (16), the side structure (11) projects beyond the connection (19) in the direction of the conveyor belt (12) and the longitudinal extent of the guide ledges (18) is dimensioned to extend up to the connection (19) or therebeyond.

12. Sealing device according claim 9, **characterised in that** the side structure (11) of the conveyor frame (10) ends above the troughed conveyor belt (12), wherein the retainer (16) is fastened to the side structure (11) of the conveyor frame (10), and the support (17) rests on the side region of the conveyor belt (12) in a position which is angled relative to the retainer (16) towards the centre of the conveyor belt (12).

13. Sealing device according to claim 12, **characterised in that**, in order to protect the connection (19) between the retainer (16) and the support (17), a cover plate (30) which faces away from the side structure (11) towards the support (17) is attached to the inner side of the side structure (11).

## Revendications

1. Dispositif d'étanchéité (15) servant à assurer l'étanchéité des zones latérales d'une bande transporteuse (12) où, des deux côtés de l'axe longitudinal de la bande transporteuse (12), est disposé à chaque fois, dans la zone de bordure de la bande transporteuse (12), un support (17), en forme de bande, s'étendant dans la direction longitudinale de la bande transporteuse (12), ledit support ayant une succession d'éléments d'étanchéité qui sont disposés en étant espacés les uns des autres par un intervalle formant un espace intermédiaire (20) et qui s'appliquent de manière souple, par une surface portante, sur la surface de la bande transporteuse (12), où les différents éléments d'étanchéité sont disposés en position oblique, en formant un angle par rapport à l'axe longitudinal de la bande transporteuse (12) et, avec leur extrémité intérieure, pointent dans le sens de marche de la bande transporteuse (12),
**caractérisé en ce que** les éléments d'étanchéité se composent de barrettes de guidage (18) configurées en forme de bande, où les barrettes de guidage (18), en ayant un rapport de la largeur des barrettes de guidage (18), relativement à la distance réciproque espaçant les barrettes de guidage (18) les unes par rapport aux autres, qui est supérieur à 1:3, sont configurées de manière étroite par comparaison avec la distance réciproque espaçant les barrettes de guidage (18), et **en ce qu'**une barrette de fermeture (25), qui s'étend le long des bords latéraux extérieurs de la bande transporteuse (12) et qui relie les extrémités extérieures des barrettes de guidage (18), est disposée en fermant vers l'extérieur l'espace intermédiaire (20) formé entre des barrettes de guidage (18).

2. Dispositif d'étanchéité selon la revendication 1, **caractérisé en ce que** les différentes barrettes de guidage (18) forment, avec le bord extérieur de la bande transporteuse (12), un angle compris entre 15° et 45°.

3. Dispositif d'étanchéité selon la revendication 2, **caractérisé en ce que** les différentes barrettes de guidage (18) forment, avec le bord extérieur de la bande transporteuse (12), un angle de 30°.

4. Dispositif d'étanchéité selon l'une quelconque des revendications 1 à 3, **caractérisé en ce que** les extrémités intérieures des barrettes de guidage (18), pointant vers le milieu de la bande transporteuse (12), sont configurées en ayant, à partir de la surface portante inférieure desdites barrettes de guidage, une partie arrondie ou une partie chanfreinée faisant saillie vers le haut sur la bande transporteuse (12).

5. Dispositif d'étanchéité selon l'une quelconque des revendications 1 à 4, **caractérisé en ce que** le support (17) s'étend sur une partie de la bande transporteuse (12) et est maintenu sur une goulotte de transfert (10), où une pluralité de barrettes de guidage (18) est fixée à chaque fois sur le support (17).

6. Dispositif d'étanchéité selon l'une quelconque des revendications 1 à 5, **caractérisé en ce que** les barrettes de guidage (18) fixées sur le support (17) se composent d'un matériau résistant à l'usure.

7. Dispositif d'étanchéité selon l'une quelconque des revendications 1 à 6, **caractérisé en ce que** le support (17) en forme de bande se compose d'un matériau flexible.

8. Dispositif d'étanchéité selon l'une quelconque des revendications 1 à 7, **caractérisé en ce que** le support (17), comprenant les barrettes de guidage (18) fixées sur ledit support, est maintenu, au moyen d'une liaison (19) permettant une libre mobilité, sur une carcasse de transporteur (10) supportant la bande transporteuse (12).

9. Dispositif d'étanchéité selon la revendication 8, **caractérisé en ce que** le support (17) est supporté par un élément de retenue (16) relié à une structure latérale (11) de la carcasse de transporteur (10) et maintenu sur l'élément de retenue (16), de manière mobile.

10. Dispositif d'étanchéité selon la revendication 9, **caractérisé en ce que** la structure latérale (11) de la carcasse de transporteur (10) se termine au-dessus de la bande transporteuse (12) incurvée en forme d'auge, en étant à distance de la surface de la bande transporteuse (12), où l'élément de retenue (16) est fixé sur la structure latérale (11) de la carcasse de transporteur (10), et le support (17), dans une position coudée par rapport à l'élément de retenue (16), en direction du bord extérieur de la bande transporteuse (12), est en appui sur la zone de bordure de la bande transporteuse (12).

11. Dispositif d'étanchéité selon la revendication 10, **caractérisé en ce que**, pour la protection de la liaison (19) formée entre le support (17) et l'élément de retenue (16), la structure latérale (11) dépasse la liaison (19) en direction de la bande transporteuse (12), et les barrettes de guidage (18) sont mesurées, dans leur étendue longitudinale, jusqu'à la liaison (19) ou bien au-delà de celle-ci.

12. Dispositif d'étanchéité selon la revendication 9, **caractérisé en ce que** la structure latérale (11) de la carcasse de transporteur (10) se termine au-dessus de la bande transporteuse (12) incurvée en forme d'auge, où l'élément de retenue (16) est fixé sur la structure latérale (11) de la carcasse de transporteur (10), et le support (17), dans une position coudée par rapport à l'élément de retenue (16), en direction du milieu de la bande transporteuse (12), est en appui sur la zone latérale de la bande transporteuse (12).

13. Dispositif d'étanchéité selon la revendication 12, **caractérisé en ce que**, pour la protection de la liaison (19) formée entre l'élément de retenue (16) et le support (17), une tôle de recouvrement (30) est fixée sur le côté intérieur de la structure latérale (11), ladite tôle de recouvrement étant dirigée en direction du support (17), depuis la structure latérale (11).
